# EUROPEAN PATENT APPLICATION

(11) **EP 2 161 489 A2**
(43) Date of publication of application: **10.03.2010**
(21) Application number: 09169577.5
(22) Date of filing: 07.09.2009
(51) Int. Cl.: F16M 13/02, F16M 11/40

(54) **Supporter**

(30) Priority: 08.09.2008 TW 97134359
(71) Applicant: Multi-Function Co., Ltd., Taipei Hsien (TW)
(72) Inventor: Lin, Wei-Jong, Taipei Hsien (TW)
(74) Representative: Dossmann, Gérard

(57) **Abstract**

A supporter having a mount (10), a supporting device (20) and a mounting means (30). The mount (10) has a bottom, a platform (11) and a screw bolt (12). The screw bolt (12) penetrates upward through the platform (11). The supporting device (20) is attached to the bottom of the mount (10) and has at least one telescopic member (21). The mounting means (30) is used to mount a mountable vehicle and attached to the supporting device (20). An electronic device being mounted on the mount (10) can be easily positioned in different angles and heights allowing convenience use thereof.

## Description

The present invention relates to a supporter, especially to a supporter being angle-adjustable and length-adjustable.

Small-sized electronic devices such as cell phones, cameras, GPS (global positioning system) are now becoming personal items used in everyday life. However, using such electronic devices outdoors is inconvenience in certain aspects. For instance, one is not able to appropriately photograph himself without help from others. When alone, it will be impossible for one to take a picture with himself in without a tripod. In addition, while riding a vehicle such as a bicycle or a motorcycle, handhold usage of cell phone or GPS is prohibited in law. A rider is forced to stop the vehicle to use a cell phone or a GPS. When in need of using the cell phone or GPS multiple times during his travel, the rider has to repeat stopping and starting the vehicle. Such action is not only extremely inconvenient for the rider, but also greatly risks the rider and other road users driving, riding or walking near the rider's vehicle.

To overcome the shortcomings, the present invention provides a supporter to mitigate or obviate the aforementioned problems.

The main objective of the invention is to provide a supporter being angle-adjustable and length-adjustable.

The supporter in accordance with the present invention has a mount, a supporting device and a mounting means. The mount has a bottom, a platform and a screw bolt. The screw bolt penetrates upward through the platform. The supporting device is attached to the bottom of the mount and has at least one telescopic member. The mounting means is used to mount a mountable vehicle and attached to the supporting device.

Other objectives, advantages and novel features of the invention will become more apparent from the following detailed description when taken in conjunction with the accompanying drawings.
Fig. 1 is a perspective view of a first embodiment of a supporter in accordance with the present invention;
Fig. 2 is an exploded perspective view of a mount being used with a cell phone cradle of the supporter in Fig. 1;
Fig. 3 is a perspective view of a second embodiment of a supporter in accordance with the present invention;
Fig. 4 is a perspective view of a third embodiment of the supporter in accordance with the present invention;
Fig. 5 is a perspective view of a mounting means of a forth embodiment of the supporter in accordance with the present invention;
Fig. 6 is an operational perspective view of the supporters in Fig. 3 and Fig. 5 mounted on a motorcycle;
Fig. 7 is an operational perspective view of the supporters in Fig. 1 and Fig. 3 mounted on a bicycle;
Fig. 8 is an operational perspective view of a fifth embodiment of a supporter in accordance mounted on a motorcycle;
Fig. 9 is an operational perspective view of a sixth embodiment of a supporter in accordance mounted on a motorcycle;
Fig. 10 is an operational perspective view of a seventh embodiment of a supporter in accordance mounted on a motorcycle; and
Fig. 11 is an exploded perspective view of a eighth embodiment of a supporter in accordance with the present invention.
Fig. 12 is a perspective view of a ninth embodiment of a supporter in accordance with the present invention.

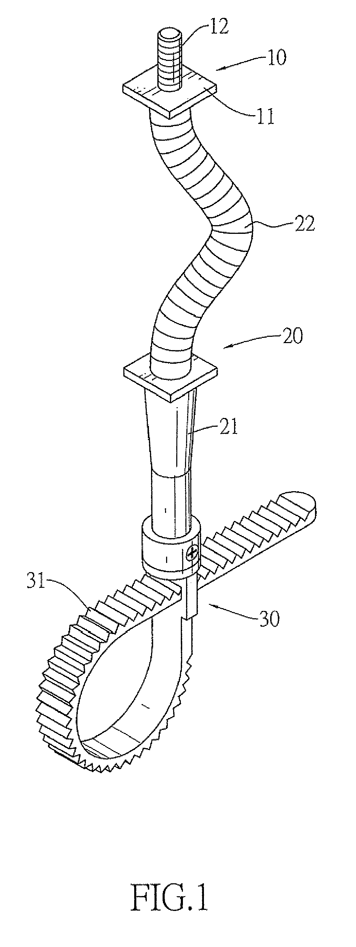

With reference to Fig. 1, a first embodiment of a supporter in accordance with the present invention comprises a mount (10), a supporting device (20) and a mounting means (30).

The mount (10) comprises a bottom, a platform (11) and a screw bolt (12). The screw bolt (12) penetrates upward through the platform (11). Beneath a common electronic device such as a camera, a bottom hole is recessed into the electronic device for mounting the electronic device. The screw bolt (12) is used to screw into the bottom hole of the electronic device in position. Furthermore, the platform (11) may be made to have a top that fits to the bottom of the electronic device. Thus the platform (11) and the screw bolt (12) together firmly hold the electronic device.

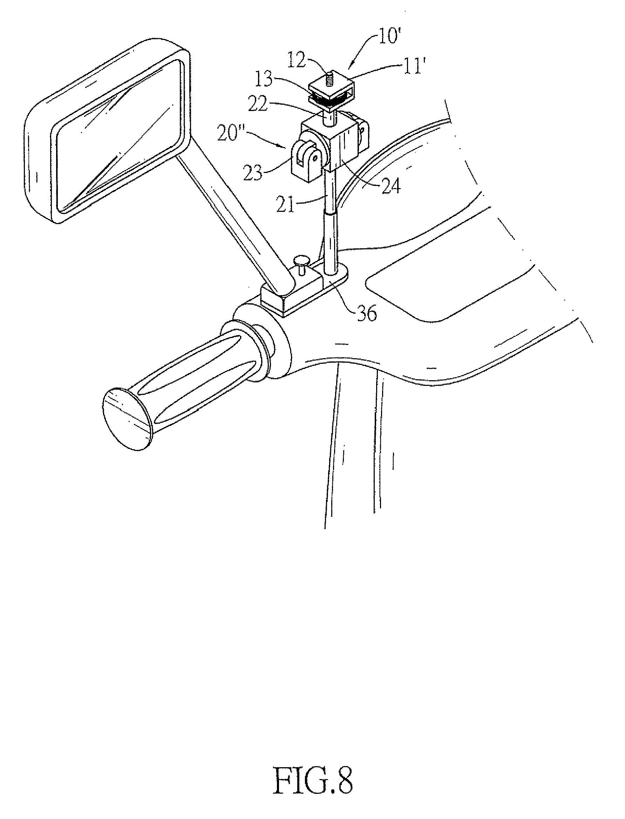

With further reference to Fig. 8, in a fifth embodiment of the present invention, the mount (10') further comprises a dial (13) for rotating the screw bolt (12). The platform (11') of the mount (10') has a top plate (not numbered), a bottom plate (not numbered) and a lateral wall (not numbered). The lateral wall connects the top and bottom plates. The dial (13) is received in the platform (11') between the top and bottom plates. The screw bolt (12) of the mount (10') penetrates the top plate and is attached to the dial (13) so that the screw bolt (12) rotates with the dial (13). The dial (13) provides a convenient means for screwing the screw bolt (12) into the bottom hole of the aforementioned electronic device.

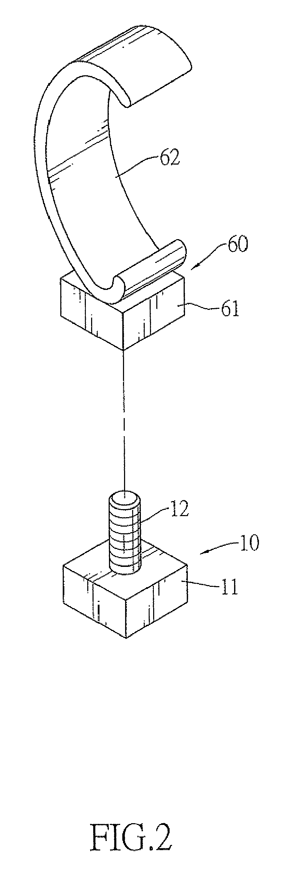

With reference to Fig. 2, when using an electronic device without a bottom hole, an adapter having an adapter bottom hole (not shown) is employed to hold the electronic device. For example, to hold a cell phone (not shown) a cell phone cradle (60) is used as the adapter. The cradle (60) has a base (61) and a holder (62). The base (61) has a top, a bottom and a bottom hole (not shown). The bottom hole of the base (61) is used to mount the screw bolt (12) of the mount and formed on the bottom of the base (61). The holder (62) is attached to the top of the base (61). The cradle (60) mounted to the mount (10) with the bottom hole of the base (61) holds a cell phone above the mount (10).

The supporting device (20) is attached to the bottom of the camera mount (10) and comprises at least one telescopic member (21). The telescopic member (21) has a length. By telescopically altering the length of the telescopic member (21), the electronic device mounted on the mount (10) is positioned in desired height, allowing satisfying operation. In the first embodiment of the supporter of the present invention, the telescopic member (21) is a telescopic tube. The telescopic member (21) of the first embodiment may have an inner tube and an outer tube, so that the inner tube is slidably connected inside the outer tube. Preferably, the telescopic member (21) has an inner tube and multiple coaxial outer tubes. The multiple outer tubes complementarily and sequentially connect to the inner tube and have an outermost tube. To shrink the telescopic member (21), the inner tube and outer tubes retract inside one another so that the telescopic member (21) presents a minimum length as the length of the outer most tube. In order to extend the telescopic member (21), the inner tube and outer tubes protrude outwards in opposite directions to form a configuration with longer length being the sum of the length of the inner tube and the lengths of the outer tubes. The mount (10) may be positioned in different height by altering the length of the telescopic member (21), allowing the electronic device mounted on the mount (10) to be operated as desired.

In addition, the supporting device (20) may further have an arbitrarily bendable flexible tube (22). The arbitrarily bendable flexible tube (22) connects the telescopic member (21) to the bottom of the mount (10) and may be a bellows. With the help of the arbitrarily bendable flexible tube (22), the mount (10) may be positioned in different height, but also conveniently positioned in different angles. Such configuration further provides conveniences for the user during operation of the electronic devices.

With further reference to Fig. 8, in the fifth embodiment of the supporter in accordance with the present invention, the supporting device (20") further has a base (24). The base (24) connects the telescopic member (21) to the bottom of the mount (10').

The telescopic member (21) may be shrunk to the minimum length, as aforementioned, save storage spaces. In an embodiment with the arbitrarily bendable flexible tube (22), the arbitrarily bendable flexible tube (22) may also be coiled to save storage spaces.

The mounting means (30) is used to mount a mountable vehicle and attached to the supporting device (20). With reference to Fig. 1, a fastening ribbon (31) is used as the mounting means (30) in the first embodiment of supporter of the present invention. The ribbon (31) has a fore end, a rear end, a hole, a surface and multiple saw-teeth. The hole is formed near the rear end and has an inner edge. The saw-teeth are formed on the surface and selectively engage with the inner edge of the hole. When use, the ribbon (31) is used to tie fast to a structural tube of a vehicle by engaging the saw-teeth with the inner edge of the hole.

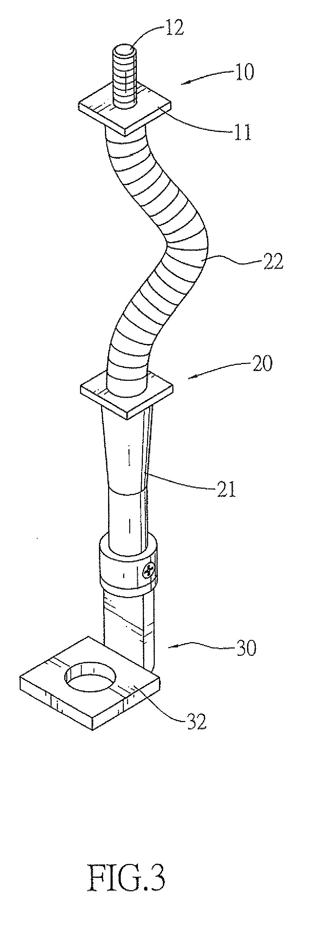

Instead of using the ribbon (31) of the first embodiment, in a second embodiment of the supporter of the present invention, a C-shaped fastener is used as the mounting means (30). The C-shaped fastener is an opening ring having two ends. When using the C-shaped fastener, a structural tube of a vehicle is received in the C-shaped fastener the C-shaped fastener is closed by joining the two ends. A means or structure for joining the two ends including but not limited to attaching, combining and locking, which is appreciated by an artisan with ordinary skill in the field. Description related is omitted. With further reference to Fig. 3, instead of using the ribbon (31) or a C-shaped fastener, a seat (32) may be used as the mounting means (30). The seat (32) has a hole. The hole is used to attach the seat (32) onto an area on a vehicle with a positioning means such as riveting or screwing.

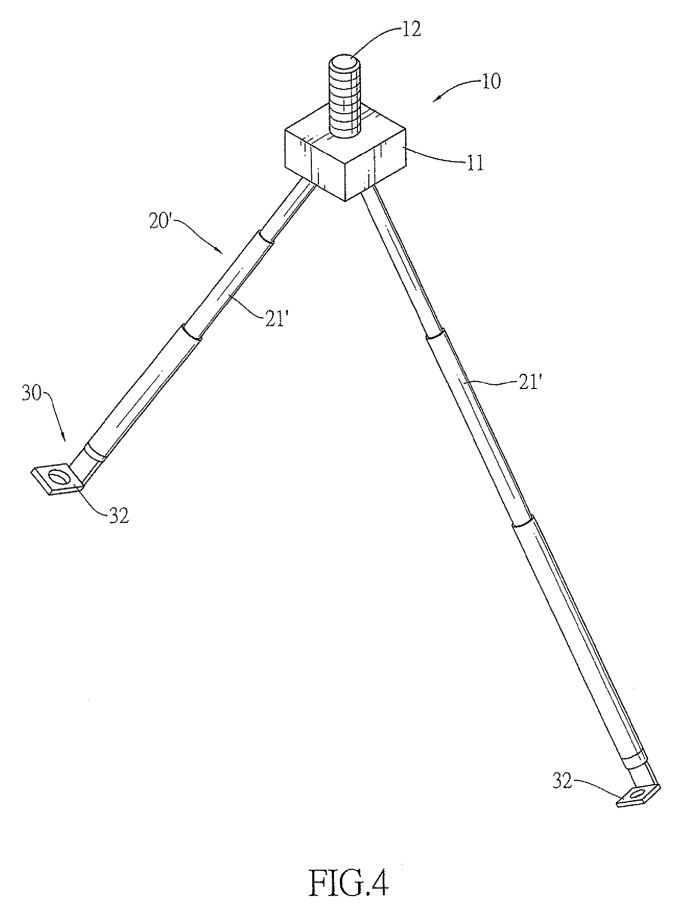

With reference to Fig. 4, in a third embodiment of the supporter of the present invention, two telescopic members (21') are attached to the bottom of the mount (10). The two telescopic members (21') form an angle and each has a distal end and each has a length. In the third embodiment, the mounting means (30) comprises two seats (32). The two seats (32) are respectively attached to the distal ends of the telescopic members (21'). Each seat (32) has a hole. The hole is used to attach the seat (32) onto an area on a vehicle with a positioning means such as riveting or screwing. Should the vehicle comprises a structure fits to the hole of the seat (32), the seat (32) may be attached to the vehicle by inserting the structure into the hole of the seat (32).

When using the third embodiment of the supporter of the present invention, the mount (10) may be positioned in different heights by simultaneously and synchronized adjustment the lengths of the telescopic members (21'). The mount (10) may also be positioned in different angles by asymmetrical adjustment of the lengths of the telescopic members (21'). With further reference to Figs. 1 and 3, in embodiments similar to the third embodiment having two telescopic members (21'), instead of the seats (32), aforementioned ribbons (31) or C-shaped fasteners may also be employed.

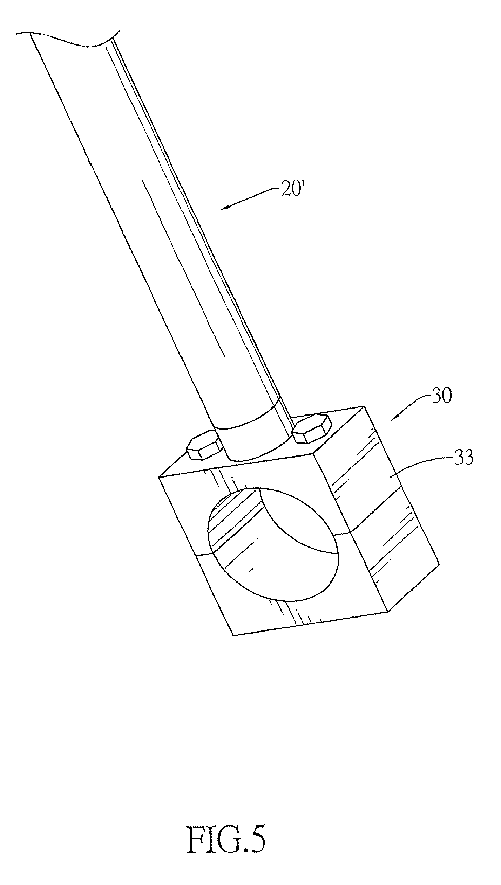

With reference to Fig. 5, in a fourth embodiment of the supporter in accordance with the present invention, other than aforementioned ribbons (31), C-shaped fasteners or seats (32), a clamp (33) having a clamping hole is used as the mounting means (30). Preferably, the clamp (33) further comprises a first member, a second member and a fastener. The fastener is used to fasten the first member and the second member together. One example of the fastener of the clamp (33) is a screw bolt penetrating the first member and the second member. By clamping a structural tube of a vehicle between the first member and the second member of the clamp (33), the supporter in accordance with the present invention to the vehicle.

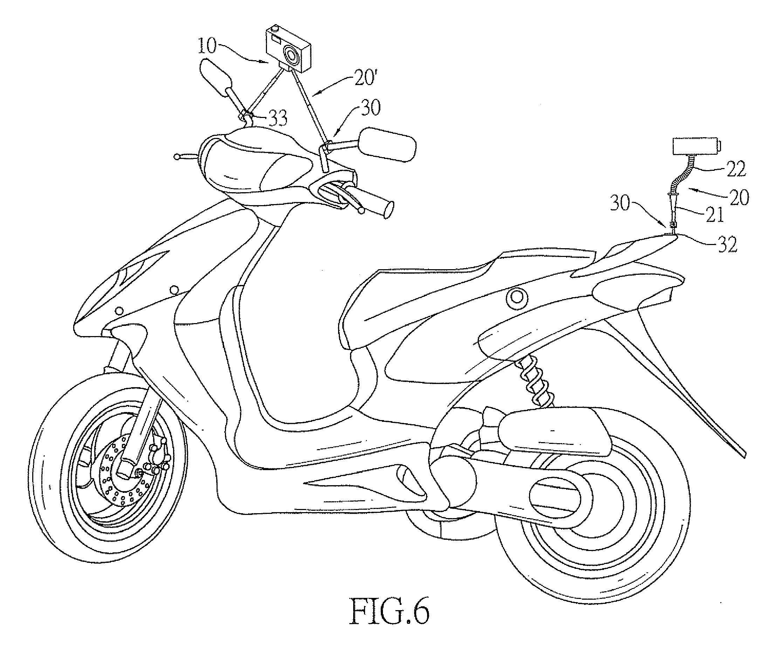

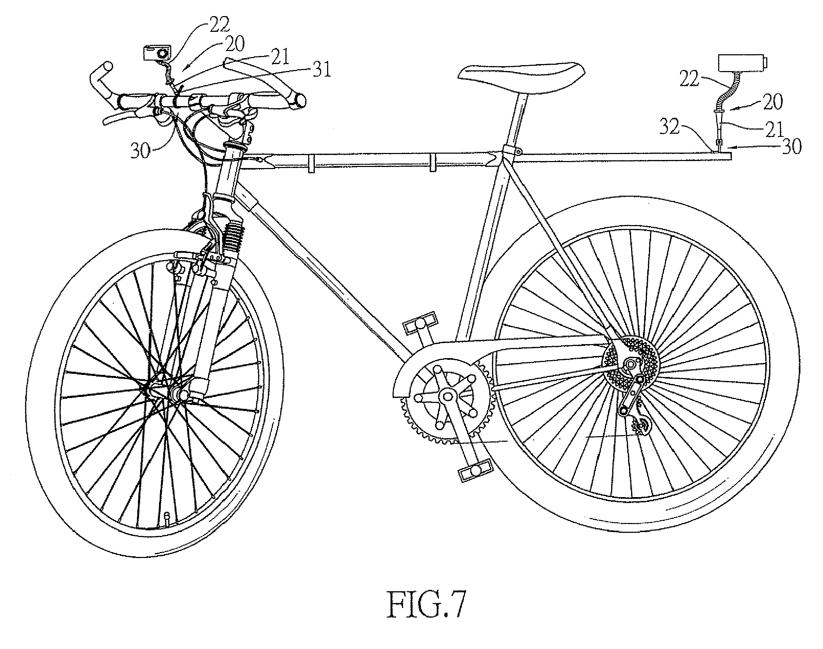

With reference to Figs. 6 and 7, a vehicle to which the supporter in accordance with the present invention may be attached to may be a motorcycle or a bicycle. It is preferred to attach the supporter having at least one telescopic member to the vehicle for ease of using an electronic device outdoors.

With reference to Fig. 8, a fifth embodiment of the supporter in accordance with the present invention comprises the platform (11) of the mount (10) further has a dial (13). The dial is attached to the screw bolt (12) and used for rotating the screw bolt (12). The supporting device (20") further comprises a base (24). The base (24) is used to connect the telescopic member (21) to the bottom of the mount (10') and has two lateral surfaces, a top and a bottom. The telescopic member (21) has a distal end. The distal end of the telescopic member (21) is attached to a vehicle. The vehicle may have a rearview mirror base (36). Feasible means for attaching the telescopic member (21) includes but not limited to screwing or welding the distal end of the telescopic member (21) to the rearview mirror base (36) of the vehicle. With such configuration, it is preferred to attach the distal end of the telescopic member (21) to a rearview mirror base (36) removed from the vehicle; and then attach the rearview mirror base (36) with the telescopic member (21) back to the vehicle.

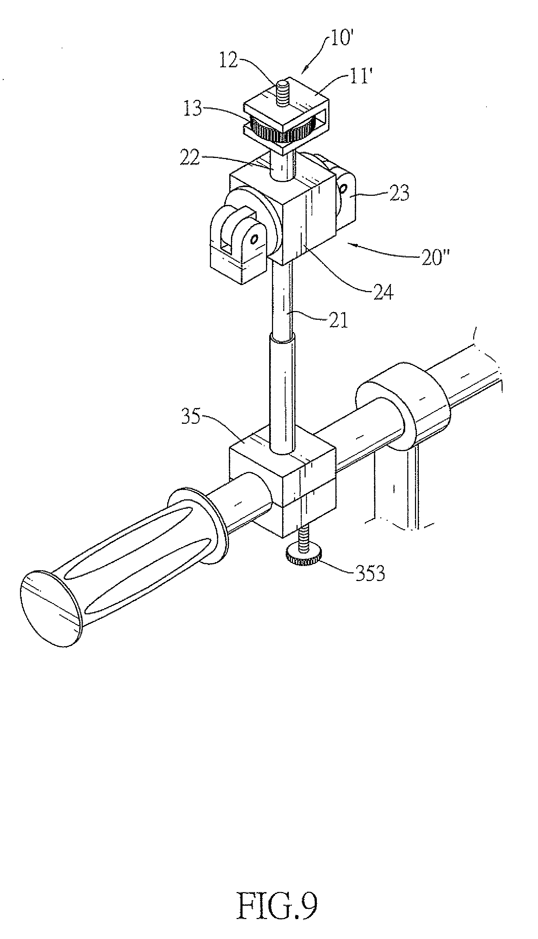

With reference to Fig. 9, in a sixth embodiment similar to the fifth embodiment, another means for attaching the distal end of a telescopic member (21) to a vehicle is utilized. A clamping block (35) is used as the mounting means (30) in the sixth embodiment. The clamping block (35) is used to clamp a structural tube, such as a handlebar, of the vehicle and has a clamping hole receiving the structural tube. The clamping effect may further be enhanced with a screw bolt penetrating the clamping block (35) and abutting the structural tube. Welding the clamping block (35) to the structural tube may also be employed to attach telescopic member (21) to the vehicle.

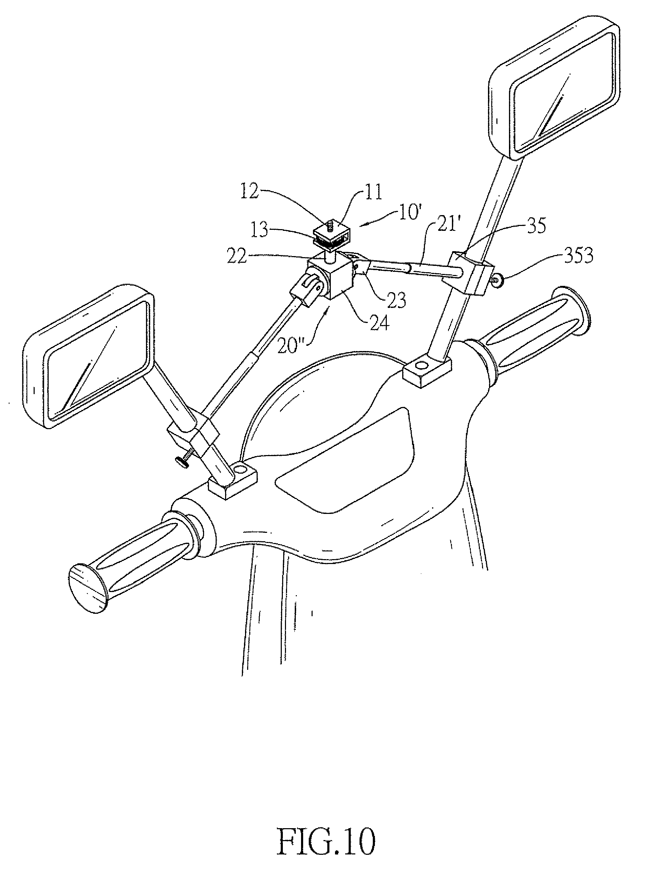

With reference to Fig. 10, a seventh embodiment of a supporter in accordance with the present invention is similar to the sixth embodiment. In the seventh embodiment, the supporting device (20") further comprises a joint member (23) connecting a telescopic member (21') to the base (24). The joint member (23) is capable of upward bending, downward bending and 360-degree lateral turning. An arbitrarily bendable flexible tube (22) of the seventh embodiment connects the bottom of the mount (10') and the top of the base (24).

When using the seventh embodiment, the telescopic member (21') may be positioned in different angles relative to the base (24) by bending the joint member (23) allowing a user to easily attach the distal ends of the telescopic member (21') to the vehicle. Preferably, the base (24) has two lateral surfaces as the fifth embodiment disclosed and two joint members (23) are respectively attached to the lateral surfaces of the base (24). Furthermore, the clamping block (35) of the sixth embodiment is attached to the distal end of the telescopic (21'). The user may alter the angles of the telescopic member (21') relative to the base (24) and easily attach the distal ends of the telescopic members (21') to the vehicle. When the vehicle has a handle bar and two rearview mirrors, the user may alter the angles of the telescopic member (21') to fit the configuration of the two rearview mirrors, and then respectively attach the distal ends of the telescopic members (21') to the rearview mirrors with the clamping blocks (35). Thus the mount (10') and an electronic device mounted on the mount (10') are located between the two rear view mirrors for convenient use.

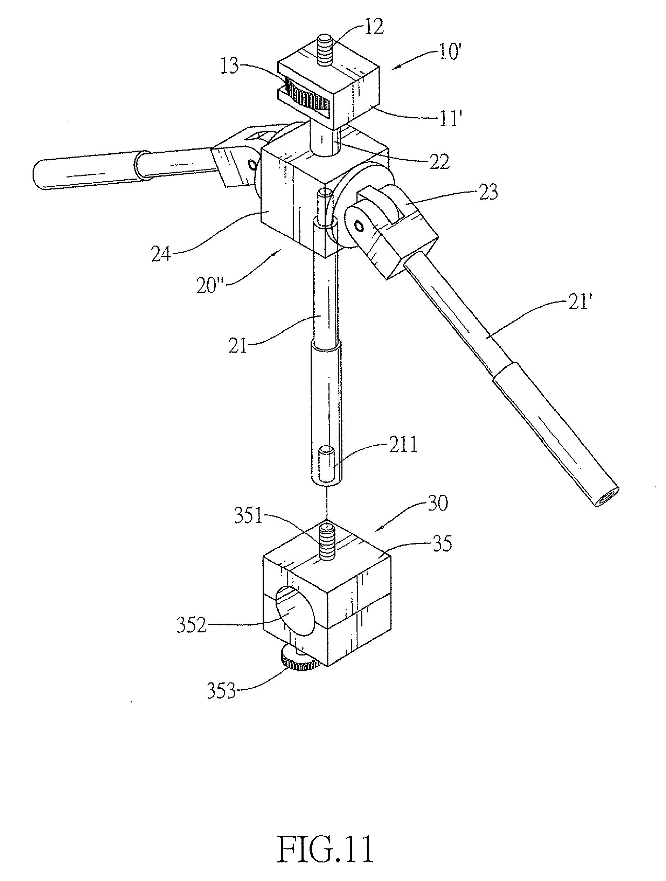

With reference to Fig. 11, a eighth embodiment of a supporter in accordance with the present invention is similar to the seventh embodiment. In the eighth embodiment, the supporting device (20") has a first telescopic member (21), as the telescopic member (21) disclosed in the sixth embodiment, being attached to the bottom of the base (24). The supporting device (20") of the eighth embodiment further has two second telescopic members (21'), as the telescopic member (21') disclosed in the seventh embodiment, being attached to the lateral surfaces of the base (24) with the joint members (23). With the versatile configuration of the eighth embodiment, the user may use the supporter of the eighth embodiment to fit various needs in using an electronic device outdoors.

In the eighth embodiment, a clamping block (35) of the sixth embodiment is attached to the distal end of the first telescopic (21). The clamping block (35) is used to clamp a structural tube, such as a handlebar, of the vehicle and has a top, a first member, a second member and a fastener (353). The fastener (353) is used to fasten the first member and the second member together. One example of the fastener (353) is a screw bolt penetrating the first member and the second member. Another example of the fastener (353) is a lock locking the first member and the second member together. The supporter of the eighth embodiment may be attached to the vehicle by allowing the structural tube between the first member and the second member and fastening the first member and the second member with the fastener (353).

In addition, in order to attach the clamping block (35) to the distal end of the first telescopic (21), an attaching hole (211) is recessed in the distal end of the first telescopic (21). The attaching hole (211) may be a screw hole or a locking hole. The clamping block (35) further has an attaching bolt (351) extends upwards from the top of the clamping block (35). The attaching bolt (351) is used to be inserted in the attaching hole (211) and may be a screw bolt or a locking pin. The configuration of the attaching hole (211) and the attaching bolt (351) allow easy attachment of the clamping block (35) to the distal end of the first telescopic (21) in a means of screwing or locking.

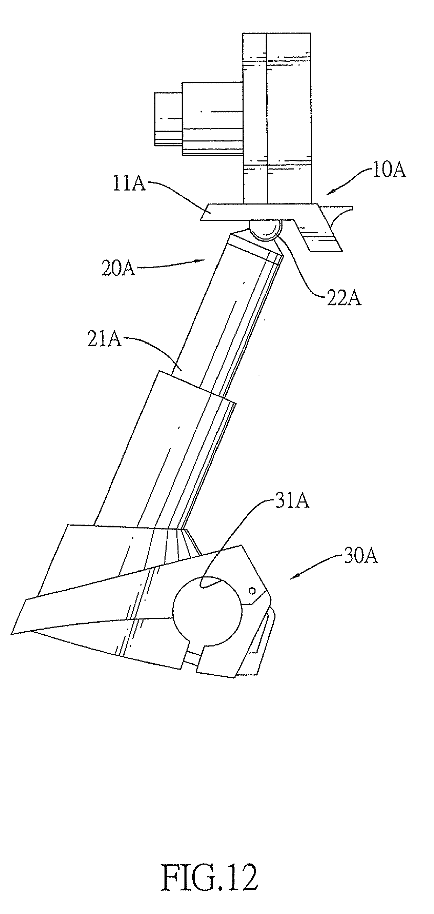

With reference to Fig. 12, a ninth embodiment of a supporter in accordance with the present invention is similar to the second embodiment. The ninth embodiment of the support has a mount (10A), a support device (20A) and a mounting means (30A), wherein the mount (10A) comprises a bottom and a platform (11A) for holding an electronic device. The supporting device (20A) is attached to the bottom of the mount (10A) and comprises a telescopic member (21A) and a ball joint (22A). The ball joint (22A) connects the telescopic member (21A) to the bottom of the mount (10A) and is capable of turning 360-degrees, which allows convenient positioning of an electronic device at different angles. The mounting means (30A) has a clamping hole (31A) for mounting a mountable vehicle and attached to the supporting device (20A).

The present invention holds an electronic device and is easy to position the electronic device in different angles or heights, allowing convenient utilization of the electronic device outdoors. In practical utilization of the present invention, a light emitting electronic device providing functions of a headlight or a flashlight mounted on the supporter in accordance of the present invention is positioned between two rearview mirrors of a vehicle. In such position, the light emitting electronic device provides extra lighting effects allowing better safety when riding the vehicle to be expectable.

## Claims

1. A supporter comprising
a mount (10) comprising
a bottom;
a platform (11); and
a screw bolt (12) penetrating upward through the platform (11);
a supporting device (20) being attached to the bottom of the mount (10) and comprising
at least one telescopic member (21); and
a mounting means (30) being used to mount a mountable vehicle and attached to the supporting device (20).

2. The supporter as claimed in claim 1, wherein
the supporting device (20) further has
an arbitrarily bendable flexible tube (22) connecting the telescopic member (21) to the bottom of the mount (10).

3. The supporter as claimed in claim 1, wherein
the supporting device (20) further has
two telescopic members (21') being attached to the bottom of the mount (10).

4. The supporter as claimed in claim 1, wherein
the platform (11) of the mount (10) further has
a dial (13) being attached to the screw bolt (12) and used for rotating the screw bolt (12).

5. The supporter as claimed in claim 1, wherein
the mounting means (30) further has
a clamp (33) having
a clamping hole.

6. The supporter as claimed in claim 5, wherein
the clamp (33) further comprises
a first member;
a second member; and
a fastener fastening the first member and the second member together.

7. The supporter as claimed in claim 1, wherein
the supporting device (20") further has
a base (24) connecting the telescopic member (21) to the bottom of the mount (10').

8. The supporter as claimed in claim 1, wherein
the supporting device (20") further comprises
a joint member (23) connecting the telescopic member (21') to the base (24).

9. The supporter as claimed in claim 2, wherein
the arbitrarily bendable flexible tube (22) is a bellows.

10. The supporter as claimed in claim 1, wherein
the joint member (23) is capable of upward bending, downward bending and 360-degree lateral turning.

11. The supporter as claimed in claim 1, wherein
the supporting device (20A) further has
a ball joint (22A) connecting the telescopic member (21A) to the bottom of the mount (10A) and capable of turning 360-degrees.
